# DEMANDE DE BREVET EUROPEEN

(11) **EP 3 032 062 A1**
(43) Date de publication de la demande: **15.06.2016**
(21) Numéro de dépôt: 15198243.6
(22) Date de dépôt: 07.12.2015
(51) Int. Cl.: F01N 11/00, F01N 3/035, B60W 20/00, F02D 41/02

(54) **PROCÉDÉ DE DIAGNOSTIC DE L'ACTIVITÉ D'UN DISPOSITIF DE DÉPOLLUTION D'UN VÉHICULE**

(30) Priorité: 11.12.2014 FR 1462284
(71) Demandeur: Renault S.A.S., 92100 Boulogne-Billancourt (FR)
(72) Inventeur: PROT, EMMANUEL, 92320 CHATILLON (FR); VALADIE, PIERRE, 92190 MEUDON (FR)

(57) **Abrégé**

L'invention se rapporte à un procédé de diagnostic d'un catalyseur (5) de dépollution d'un véhicule hybride comprenant un moteur thermique (3) et un moteur électrique (2) associé au moteur thermique et participant à l'entraînement du véhicule, ledit catalyseur (5) étant destiné à réduire les émissions de particules polluantes en provenance dudit moteur thermique (3). La principale caractéristique d'un procédé de diagnostic selon l'invention est qu'il comprend les étapes suivantes:
- une étape de fonctionnement du moteur thermique (3),
- une étape de fonctionnement du moteur électrique (2) apte à permettre au moteur thermique (3) de se maintenir dans un état de fonctionnement stable et répétable sur une période prédéfinie,
- une étape de diagnostic du catalyseur (5) pendant une période de référence qui est incluse dans la période de prédéfinie.

## Description

L'invention se rapporte à un procédé de diagnostic de l'état de fonctionnement d'un dispositif de dépollution d'un véhicule. Un tel procédé est particulièrement adapté à un véhicule hybride possédant un moteur thermique à essence et un moteur électrique.

L'OBD (de l'anglais *On Board Diagnostic*) consiste à diagnostiquer certains éléments internes ou externes du moteur servant à assurer une fonction de dépollution au niveau du véhicule. Un tel diagnostic permet de détecter une éventuelle défaillance de ces éléments et prévenir le conducteur des conséquences que cela pourrait avoir sur les émissions polluantes, telles que par exemple, les hydrocarbures, le monoxyde de carbone et les oxydes d'azote.

Ces éléments externes comprennent un dispositif de post-traitement incluant un catalyseur essence. Pour les normes en vigueur et à venir, l'exigence sur le diagnostic de ce catalyseur est très contrainte : les seuils OBD deviennent plus sévères, de même que la fréquence de passage du diagnostic de ce catalyseur ou IUPR (de l'anglais In Use Performances Ratio) : compteur de la fréquence de passage des diagnostics dans la rue.

Il faut donc répondre aux contraintes ci-dessus, tout en assurant en parallèle une fiabilité de diagnostic du catalyseur satisfaisante, qui réponde aux exigences de qualité. Pour satisfaire cette contrainte forte, il faut trouver un système qui limite :
- les fausses détections de pièces en bon état, qui risqueraient d'engendrer un allumage inutile d'un voyant d'alerte dans la rue,
- les non détections de pièces en mauvais état, qui risqueraient de faire rater une homologation OBD et de ne pas respecter la règlementation.

Le principe de fonctionnement du diagnostic d'un catalyseur à 3 voies se base sur l'estimation de la capacité de stockage en oxygène dudit catalyseur ou OSC (de l'anglais *Oxygen Storage Capacity*): c'est le critère de ce diagnostic. L'OSC est l'image du nombre de sites catalytiques permettant la conversion des gaz d'échappement et représente la capacité du catalyseur à dépolluer le moteur. L'estimation de cette capacité de stockage se fait en deux étapes :
- Un créneau riche pour lequel la richesse Ri est égale à 1,07. Ce créneau est effectué sur une période dépendant du débit d'air à l'échappement, typiquement entre 3 et 5 secondes, et permet de vider en oxygène le catalyseur,
- Un créneau pauvre pour lequel la richesse Ri est égale à 0,93 et permettant de remplir en oxygène le catalyseur.

Le niveau de diagnostic imposé par les normes en vigueur, entraîne des contraintes sur la définition technique du catalyseur, notamment au niveau du chargement en cérine, qui influe sur sa capacité à stocker l'oxygène. Ces contraintes engendrent un surcoût important quant au choix du catalyseur, qui doit avoir un écart d'OSC élevé entre la pièce bonne et la pièce mauvaise, le diagnostic du catalyseur se basant sur cette grandeur physique.

Un procédé de diagnostic selon l'invention permet de détecter de façon sûre et fiable l'état de fonctionnement d'un catalyseur essence d'un véhicule hybride, en s'affranchissant d'un tel surcoût.

L'invention a pour objet un procédé de diagnostic d'un catalyseur de dépollution d'un véhicule hybride comprenant un moteur thermique et un moteur électrique associé au moteur thermique et participant à l'entraînement du véhicule, ledit catalyseur étant destiné à réduire les émissions de particules polluantes en provenance dudit moteur thermique.

La principale caractéristique d'un procédé de diagnostic selon l'invention est qu'il comprend les étapes suivantes,
- une étape de fonctionnement du moteur thermique,
- une étape de fonctionnement du moteur électrique apte à permettre au moteur thermique de se maintenir dans un état de fonctionnement stable et répétable sur une période prédéfinie,
- une étape de diagnostic de l'activité du catalyseur pendant une période de référence qui est incluse dans la période prédéfinie.

L'utilisation du moteur électrique en appoint du moteur thermique pour répondre à une demande de couple spécifique du conducteur, permet au moteur thermique de fonctionner dans une plage de régime qui est stable et répétable, de manière à pouvoir réaliser l'étape de diagnostic du catalyseur dans des conditions optimisées. Schématiquement, grâce à l'apport du moteur électrique, le moteur thermique fonctionne de façon sensiblement constante et à une puissance raisonnable. L'utilisation du moteur électrique est provoquée, lorsqu'un diagnostic de l'état de fonctionnement du catalyseur a été décidé. La durée de la période de référence est inférieure ou égale à la durée de la période prédéfinie. Préférentiellement, la durée de la période de référence est comprise entre 5 et 15 secondes. De façon avantageuse, le moteur thermique est un moteur à essence.

Avantageusement, l'état de fonctionnement stable et répétable du moteur thermique est défini par au moins un paramètre à choisir parmi un débit d'air, un régime et une charge dudit moteur.

De façon préférentielle, l'état de fonctionnement stable et répétable correspond à une charge du moteur thermique, qui est inférieure à une valeur seuil prédéterminée. En effet, au-delà de cette valeur seuil, la fiabilité de fonctionnement du moteur thermique n'est pas estimée optimale et tout diagnostic réalisé à des valeurs de charge du moteur qui seraient supérieures à cette valeur seuil, risquerait d'être biaisé.

Préférentiellement, la valeur seuil de la charge du moteur correspond à un débit d'air sensiblement égal à 120kg/h.

De façon avantageuse, l'état de fonctionnement stable et répétable correspond à une amplitude de variation d'une charge du moteur, qui est inférieure à une valeur seuil prédéterminée. En effet, il est important que sur la période de référence de réalisation de l'étape de diagnostic, le régime du moteur soit sensiblement constant et n'oscille pas entre des valeurs extrêmes trop éloignées les unes des autres.

Avantageusement, l'amplitude de variation maximum de la charge du moteur sur la période de référence est inférieure ou égale à 15kg/h. Préférentiellement, ladite amplitude de variation maximum est inférieure ou égale à 10kg/h.

De façon préférentielle, l'étape de diagnostic se fonde sur l'estimation de la capacité de stockage en oxygène du catalyseur sur la période de référence.

Préférentiellement, l'estimation de la capacité de stockage en oxygène s'effectue avec une sonde amont et une sonde aval placées de part et d'autre du catalyseur et comprend trois étapes :
- une injection de carburant avec une richesse supérieure à 1 pendant une première période pour vider en oxygène le catalyseur,
- une injection de carburant avec une richesse inférieure à 1 pendant une deuxième période pour remplir en oxygène le catalyseur,
- une étape d'évaluation de la quantité d'oxygène stockée par le catalyseur à travers la durée nécessaire à la sonde aval pour basculer en régime pauvre par rapport à la sonde amont.

Il est à noter que les notions « aval » et « amont » sont à considérer par rapport au sens de passage des gaz d'échappement dans le catalyseur.

De façon avantageuse, la première période est comprise entre 3 et 5 secondes.

Avantageusement, le procédé de diagnostic selon l'invention, est réalisé une fois par phase de roulage du véhicule. Autrement dit, à chaque fois que le véhicule effectue un trajet, un procédé selon l'invention est mis en oeuvre, afin de contrôler de façon régulière et rapprochée l'efficacité du catalyseur en matière de dépollution.

Un procédé de diagnostic selon l'invention présente l'avantage d'être sûr et fiable, tout en demeurant d'un coût modéré car il sollicite le moteur électrique du véhicule qui est déjà présent dans le véhicule, sans nécessiter l'ajout de pièces supplémentaires et/ou des modifications structurelles de pièces déjà existantes. Il a de plus l'avantage de ne pas engendrer un encombrement important pour réaliser l'étape de diagnostic du catalyseur, car il implique essentiellement des pièces déjà présentes dans le véhicule.

On donne, ci-après, une description détaillée d'un mode de réalisation préféré d'un procédé de diagnostic selon l'invention, en se référant aux figures 1 à 3C.
- la figure 1 est une vue schématique d'une architecture d'un véhicule hybride permettant de mettre en oeuvre un procédé de diagnostic selon l'invention,
- La figure 2 est un diagramme illustrant un exemple de variation de la richesse en fonction du temps, au cours d'une étape de diagnostic de l'état de fonctionnement d'un catalyseur d'un procédé selon l'invention,
- La figure 3A est un diagramme illustrant un premier exemple de la variation au cours du temps du régime d'un moteur thermique d'un véhicule hybride, pour lequel un diagnostic du catalyseur de dépollution présente un risque de fiabilité,
- La figure 3B est un diagramme illustrant un deuxième exemple de la variation au cours du temps du régime d'un moteur thermique d'un véhicule hybride, pour lequel un diagnostic du catalyseur de dépollution est insuffisamment amélioré par rapport à la situation de la figure 3A,
- La figure 3C est un diagramme illustrant un exemple de la variation au cours du temps du régime d'un moteur thermique et d'un moteur électrique d'un véhicule hybride, pour lequel un diagnostic du catalyseur de dépollution est sûr et fiable.

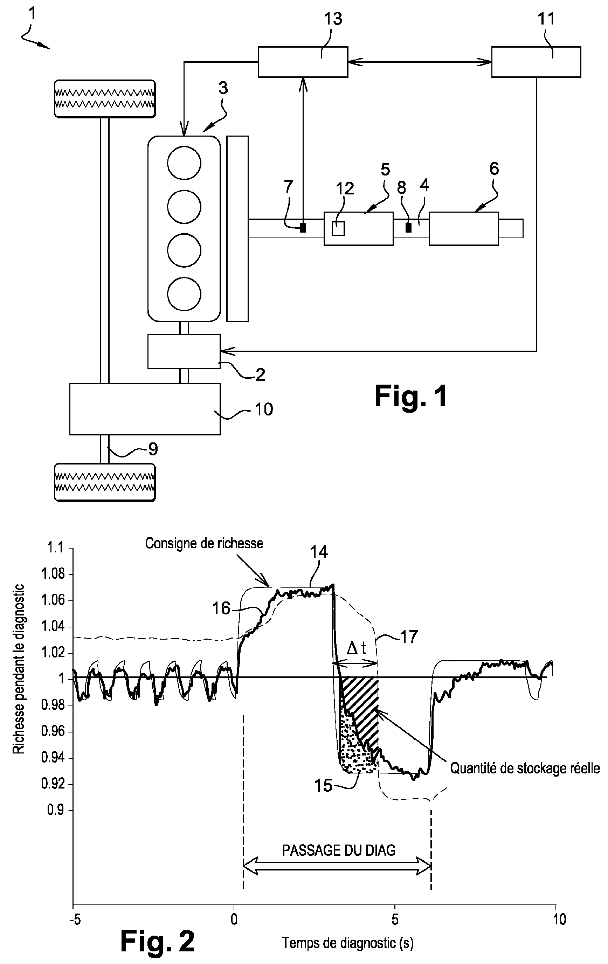

En se référant à la figure 1, une architecture 1 d'un véhicule hybride apte à mettre en oeuvre un procédé de diagnostic selon l'invention, comprend schématiquement un moteur électrique 2, un moteur thermique 3 et une ligne d'échappement 4 pour l'évacuation des gaz de combustion issus du moteur thermique 3. Le moteur électrique 2 est en prise avec la transmission 9 aux roues du véhicule via un réducteur 10. Le moteur thermique 3 peut soit être en prise avec le moteur électrique 2 et la transmission 9, soit tourner à vide. Un calculateur hybride 11 reçoit une requête de couple de la part du conducteur, par exemple provenant de l'enfoncement de la pédale d'accélération du véhicule. Cette requête correspond au couple nécessaire à l'entraînement du véhicule. Le véhicule hybride fonctionne essentiellement en mode électrique, c'est-à-dire que le couple est de préférence entièrement fourni par le moteur électrique 3. Si cette requête ne peut pas être satisfaite par le moteur électrique 2, le calculateur 11 sollicite le moteur thermique 3, via un calculateur 13 du moteur thermique, pour venir en appoint du moteur électrique 2, c'est-à-dire pour fournir la différence entre le couple d'entraînement et le couple maximal que peut fournir le moteur électrique 2. Inversement, si le moteur électrique 2 peut satisfaire à cette requête et assurer à lui seul la traction du véhicule, le calculateur 11 sollicite la coupure du moteur thermique 3 afin d'émettre le moins de gaz polluants possible, et de limiter au maximum la consommation de carburant.

La ligne d'échappement 4 comprend un catalyseur 5 de traitement des émissions polluantes, dit catalyseur amont. Elle peut comprendre en outre au moins un catalyseur additionnel 6, dit catalyseur aval. La ligne d'échappement 4 comprend en outre deux sondes de richesse 7, 8. La première sonde 7, dite sonde de richesse amont, est placée dans la ligne d'échappement 4 à l'entrée du catalyseur amont 5, et la deuxième sonde 8, dite sonde aval, est placée dans ladite ligne 4, à la sortie dudit catalyseur amont 5. Ces deux sondes 7, 8 sont destinées à déterminer la capacité dudit catalyseur amont 5 à stocker de l'oxygène OSC. Un capteur de température 12 peut être inséré dans le catalyseur amont 5, afin de connaitre en temps réel et en permanence, lors d'une phase de roulage du véhicule, la température dudit catalyseur amont 5.

Un procédé de diagnostic de l'activité du catalyseur 5 de dépollution de l'architecture 1 d'un véhicule hybride décrit ci-avant, comprend les étapes suivantes,
- une étape de fonctionnement du moteur thermique 3,
- une étape de fonctionnement du moteur électrique 2 apte à permettre au moteur thermique 3 de se maintenir dans un état de fonctionnement stable et répétable sur une période prédéfinie,
- une étape de diagnostic du catalyseur 5 amont pendant une période de référence qui est incluse dans la période de référence.

En se référant à la figure 2, l'étape de diagnostic du catalyseur 5 se fonde de façon générale sur l'estimation de la capacité de stockage en oxygène dudit catalyseur 5 sur la période de référence. Cette estimation s'effectue au moyen de la sonde amont 7 et de la sonde aval 8, et comprend essentiellement trois étapes :
- une première étape d'injection 14 de carburant avec une richesse élevée de 1.07, pendant une première période comprise entre 3 et 5 secondes, cette étape étant destinée à vider en oxygène le catalyseur 5,
- une deuxième étape d'injection 15 de carburant avec une richesse pauvre de 0.93 pour remplir en oxygène le catalyseur 5,
- une étape d'évaluation de la quantité d'oxygène stockée par le catalyseur 5 à travers la durée Δt nécessaire à la sonde aval 8 pour basculer en régime pauvre par rapport à la sonde amont 7. La courbe 16 traduit la mesure de la richesse par la sonde amont 7. La courbe 17 traduit la mesure de la richesse par la sonde aval 8.

Cette étape d'évaluation de la quantité d'oxygène stockée par le catalyseur 5 n'a de sens que si le moteur thermique 3 se trouve constamment dans un état de fonctionnement stable et répétable, pour garantir la fiabilité du diagnostic.

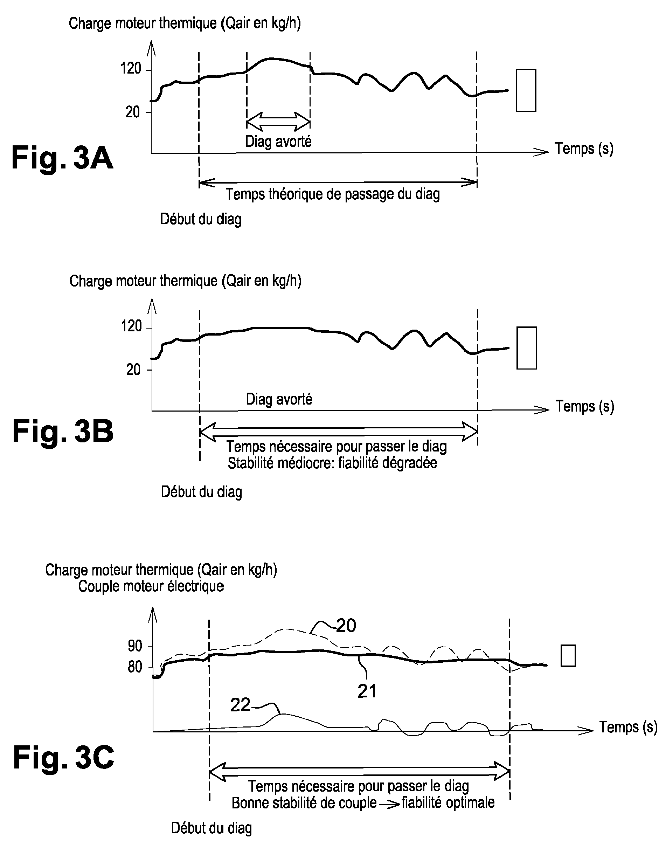

En effet, si le couple demandé par le conducteur du véhicule n'est fourni que par le moteur thermique 3, il est possible que la charge dudit moteur 3 puisse atteindre une valeur très élevée sur une courte période, comme l'illustre l'exemple de la figure 3A, pour lequel ladite charge dépasse un seuil maximal de charge donné, par exemple 120kg/h. Dans ce cas, si la période de référence servant à l'établissement du diagnostic de l'activité du catalyseur 5 inclut une telle courte période, le moteur thermique 3 présente au moins ponctuellement un état de fonctionnement instable et ledit diagnostic ne sera pas fiable.

De même, si le couple demandé par le conducteur du véhicule n'est fourni que par le moteur thermique 3, il est possible que la charge dudit moteur 3 oscille plusieurs fois entre des valeurs extrêmes trop éloignées, comme l'illustre l'exemple de la figure 3B, pour lequel l'amplitude de variation peut atteindre 80kg/h. Dans ce cas, si la période de référence servant à l'établissement du diagnostic de l'activité du catalyseur 5 inclut de telles variations de grande amplitude, le moteur thermique 3 présente au moins ponctuellement un état de fonctionnement instable, et ledit diagnostic ne sera pas fiable.

En se référant à la figure 3C, qui illustre un procédé de diagnostic selon l'invention, le couple de consigne 20 global, demandé par le conducteur pour l'entraînement du véhicule est non plus fourni uniquement par le moteur thermique 3, mais conjointement par ledit moteur thermique 3 et par le moteur électrique 2. De cette manière, le couple global 20 est la somme d'une composante 21 produite par le moteur thermique 3 et d'une composante 22 produite par le moteur électrique 2. L'utilisation du moteur électrique 2 lors de la période de référence dédiée à l'établissement du diagnostic du catalyseur 5, permet de placer le moteur thermique 3 dans un état de fonctionnement stable et répétable, correspondant à une charge modérée et sensiblement constante. De cette manière, le diagnostic du catalyseur 5 est réalisé dans des conditions favorables pour rendre ledit diagnostic sûr et fiable.

## Revendications

1. Procédé de diagnostic d'un catalyseur (5) de dépollution d'un véhicule hybride comprenant un moteur thermique (3) et un moteur électrique (2) associé au moteur thermique et participant à l'entraînement du véhicule, ledit catalyseur (5) étant destiné à réduire les émissions de particules polluantes en provenance dudit moteur thermique (3), **caractérisé en ce qu'**il comprend les étapes suivantes,
- une étape de fonctionnement du moteur thermique (3),
- une étape de fonctionnement du moteur électrique (2) apte à permettre au moteur thermique (3) de se maintenir dans un état de fonctionnement stable et répétable sur une période prédéfinie,
- une étape de diagnostic du catalyseur (5) pendant une période de référence qui est incluse dans la période de prédéfinie.

2. Procédé selon la revendication 1, **caractérisé en ce que** l'état de fonctionnement stable et répétable du moteur thermique (3) est défini par au moins un paramètre à choisir parmi un débit d'air, un régime et une charge dudit moteur.

3. Procédé selon l'une quelconque des revendications 1 ou 2, **caractérisé en ce que** l'état de fonctionnement stable et répétable correspond à une charge du moteur thermique (3), qui est inférieure à une valeur seuil prédéterminée.

4. Procédé selon la revendication 3, **caractérisé en ce que** la valeur seuil de la charge du moteur (3) correspond à un débit d'air de 120kg/h.

5. Procédé selon l'une quelconque des revendications 1 à 4, **caractérisé en ce que** l'état de fonctionnement stable et répétable correspond à une amplitude de variation d'une charge du moteur thermique (3), qui est inférieure à une valeur seuil prédéterminée.

6. Procédé selon la revendication 5, **caractérisé en ce que** l'amplitude de variation maximum de la charge du moteur (3) sur la période de référence est inférieure ou égale à 15kg/h.

7. Procédé selon l'une quelconque des revendications 1 à 6, **caractérisé en ce que** l'étape de diagnostic se fonde sur l'estimation de la capacité de stockage en oxygène du catalyseur (5) sur la période de référence.

8. Procédé selon la revendication 7, **caractérisé en ce que** l'estimation de la capacité de stockage en oxygène s'effectue avec une sonde amont (7) et une sonde aval (8) placées de part et d'autre du catalyseur (5) et comprend trois étapes :
- une injection de carburant (14) avec une richesse supérieure à 1 pendant une première période pour vider en oxygène le catalyseur (5),
- une injection de carburant (15) avec une richesse inférieure à 1 pendant une deuxième période pour remplir en oxygène le catalyseur (5),
- une étape d'évaluation de la quantité d'oxygène stockée par le catalyseur (5) à travers la durée nécessaire Δt à la sonde aval (8) pour basculer en richesse pauvre par rapport à la sonde amont (7).

9. Procédé selon la revendication 8, **caractérisé en ce que** la première période est comprise entre 3 et 5 secondes.

10. Procédé selon l'une quelconque des revendications 1 à 9, **caractérisé en ce qu'**il est réalisé une fois par phase de roulage du véhicule.
